# EUROPEAN PATENT SPECIFICATION

(11) **EP 1 460 536 B1**
(45) Date of publication and mention of the grant of the patent: **16.12.2009**
(21) Application number: 04075454.1
(22) Date of filing: 13.02.2004
(51) Int. Cl.: G06F 9/44

(54) **Computer system capable of operating in multiple operation modes.**
Rechnersystem für mehrere Betriebsmodi
Procédé d'ordinateur pour plusieurs modes d'opération

(30) Priority: 20.03.2003 CN 03107327
(43) Date of publication of application: 22.09.2004
(73) Proprietor: ACER INCORPORATED, Taipei Hsien 221 (TW)
(72) Inventor: Ko, Ming-Chih, Hsi-Chih City, Taipei Hsien 221 (TW); Wu, Chien-Hau, Hsi-Chih City, Taipei Hsien 221 (TW); Kuo, Shih-Chieh, Hsi-Chih City, Taipei Hsien 221 (TW); Chang, Kuo-Hua, Hsi-Chih City, Taipei Hsien 221 (TW)
(74) Representative: Mertens, Hans Victor

(56) References cited:
- EP-A- 1 022 655
- EP-A- 1 154 350
- US-A- 5 956 475
- US-B1- 6 357 000
- BRIAN GERST: "RE: PROPER PLACE TO DISCUSS KERNEL 'BLOATEDNESS'?" INTERNET ARTICLE, [Online] 29 January 1999 (1999-01-29), XP002350394 INTERNET Retrieved from the Internet: URL:http://www.uwsg.iu.edu/hypermail/linux /kernel/9901.3/1354.html> [retrieved on 2005-10-20]

## Description

### BACKGROUND OF THE INVENTION

### Field of the Invention

The present invention relates to a system and method of operating a computer, and particularly to a computer system that is enabled to operate in multiple modes according to the manipulation of a mode controller.

### Description of the Related Art

In addition to the conventional functions that a computer can provide, most current computer systems have integrated a great amount of additional function for the purpose of entertainment, such as CD/MP3 player, VCD/DVD player, TV broadcaster and photo viewer apparatus.

Current computer systems can satisfy the demands of users. The operating system of a computer can execute numerous multimedia software, such as music player, video player, TV broadcaster, radio (AM/FM) receiver, photo capturer and image explorer, video/audio recording programs, and perform associated multimedia functions using related peripheral appliances and corresponding drivers. However, there is no simple and effective mechanism by which users can operate the multimedia software conveniently. In a conventional operating environment of a computer, the operating system of the computer system must be activated first, so that users can manually select and launch specific software to perform desired functions. The operating system is a complex software product capable of allowing the computer system to accomplish the functions required by the user, and the normal boot procedure of the computer system takes a long time to load applications and drivers and enable initial settings. Thus it is inefficient for users to perform desired multimedia functions in the conventional operating environment.

EP 154 350 describes a computer having a single drive with a first boot partition and a second boot partition. A selection window requests the user to select either the first or the second boot partition. The computer is started from the selected boot partition, and the non-selected partition is hidden.

Further, US 6 357 000 describes a computer system having a storage device with an operating system partition and at least one variable partition. The variable partition can be accessed in addition to the conventionally provided single operating system partition. Each variable partition contains variable load modules which are optionally loaded in addition to the permanent load modules stored on the operating system partition.

In practice, the computer system functions solely as an electronic multimedia device. That is, only related applications and peripheral hardware corresponding to the specified multimedia functions are used, while other software and hardware elements of the computer system are not required. Therefore, the time spent in booting the computer system and performing related operations is a key issue for users who desires to efficiently use the computer system.

### SUMMARY OF THE INVENTION

It is therefore an object of the present invention to provide a computer system capable of operating in multiple operation modes according to the manipulation of a mode controller being connected to the computer, either by a cable or wireless means.

To achieve the above object, the present invention provides a computer system capable of operating in multiple operation modes. The computer system according to the embodiment of the present invention includes a storage device having a first disk partition and a second disk partition, a mode controller having a status indicating an operation mode of the computer system, and a master boot program to check the status of the mode controller. If the computer system is configured to operate in a normal PC mode, the master boot program hides the second disk partition, boots from the first disk partition and loads a complete version of an operating system stored therein, thereby enables the computer system to run in the PC mode. If the computer system is configured to operate in a sub-mode being defined as an entry of a multimedia operation mode class, the master boot program activates the second disk partition, boots the computer system therefrom and loads a refined version of an operating system stored therein, thereby enables the computer system to run in the selected sub-mode under the control of the refined version of the operation system.

If the computer is operating in the selected sub-mode, the master boot program further sets the memory size of the data area in the BIOS (Basic Input/Output System) to a predetermined value, and purifies the operating environment of the operating system, for example, by disabling the keyboard and mouse devices and Plug-and-Play capability.

Further, a monitor program is executed when the computer system is operating in the selected sub-mode. The monitor program is active on the background of the refined version of the operating system, and is used to detect the status of the mode controller. A first sub-mode application specific to the selected sub-mode is running under the control of the refined version of the operating system. If the operation mode of the computer system changes to another sub-mode, the monitor program stops the first sub-mode application and executes a second sub-mode application specific to the currently selected sub-mode. If the operation mode of the computer system changes back to the PC mode, the monitor program stops the first sub-mode application, enables the computer to enter a hibernation state, and reboots the computer system. If the computer system is turned off, the monitor program stops the first sub-mode application and enables the computer to enter the hibernation state.

Further, a resident program is executed when the computer system is running in the PC mode. The resident program detects the status of the mode controller indicating the operation mode of the computer system, displays a confirmation window if the operation mode of the computer system is about to change to a sub-mode, and reboots the computer system if a confirmation signal is received via the confirmation window.

An operating method of a computer system according to the embodiment of the present invention is also provided. First, a storage device having a first disk partition and a second disk partition is provided in the computer system. Then, a mode controller having a status indicating an operation mode of the computer system is also provided. At first, a master boot program checks the status of the mode controller. If the status of the mode controller indicates a normal PC mode, the master boot program hides the second disk partition, boots the computer system from the first disk partition, and loads a complete version of an operating system stored therein, thereby enables the computer system to run in the PC mode. If the status of the mode controller indicates a sub-mode being defined as an entry of a multimedia operation mode class, the master boot program activates the second disk partition, boots the computer system therefrom, and loads a refined version of the operating system stored therein, thereby enables the computer system to run in the sub-mode.

Similarly, if the computer system in running in the selected sub-mode, the master boot program further sets the memory size of the data area in the BIOS to a predetermined value, and purifies the operating environment of the operating system, for example, by disabling keyboard and mouse devices and Plug-and-Play capability.

Further, a monitor program is executed when the computer system is running in the selected sub-mode. The monitor program executes a first sub-mode application specific to the selected sub-mode and detects the status of the mode controller. If the status changes to another sub-mode, the monitor program stops the first application and executes a second sub-mode application specific to the currently selected sub-mode. If the operation mode of the computer system changes back to the PC mode, the monitor program stops the first sub-mode application, enables the computer to enter a hibernation state, and reboots the computer system. If the computer system is turned off, the monitor program stops the first sub-mode application and enables the computer to enter the hibernation state.

Further, a resident program is executed when the computer system is running in the PC mode. The resident program detects the status of the mode controller, displays a confirmation window if the operation mode of the computer system changes to a sub-mode, and reboots the computer system if a confirmation signal is received via the confirmation window.

### BRIEF DESCRIPTION OF THE DRAWINGS

The aforementioned objects, features and advantages of the invention will become apparent by referring to the following detailed description of the preferred embodiment with reference to the accompanying drawings, wherein:
Fig. 1 is a schematic diagram illustrating the architecture of the computer systems capable of operating in multiple operation modes according to an embodiment of the present invention;
Fig. 2 is a schematic diagram illustrating the structure of a hard disk of the computer system according to the embodiment of the present invention;
Fig. 3 is an example showing the mode controller and LCD module;
Fig. 4 is a flowchart showing the boot process of the computer system according to the embodiment of the present invention;
Fig. 5 is a flowchart showing the process of the master boot program according to the embodiment of the present invention;
Fig. 6 is a flowchart showing the process of the monitor program while the computer system is running in a sub-mode being defined as an entry in a multimedia operation mode class according to the embodiment of the present invention; and
Fig. 7 is a flowchart showing the process of the resident program while the computer system is running in the PC mode according to the embodiment of the present invention.

### DETAILED DESCRIPTION OF THE INVENTION

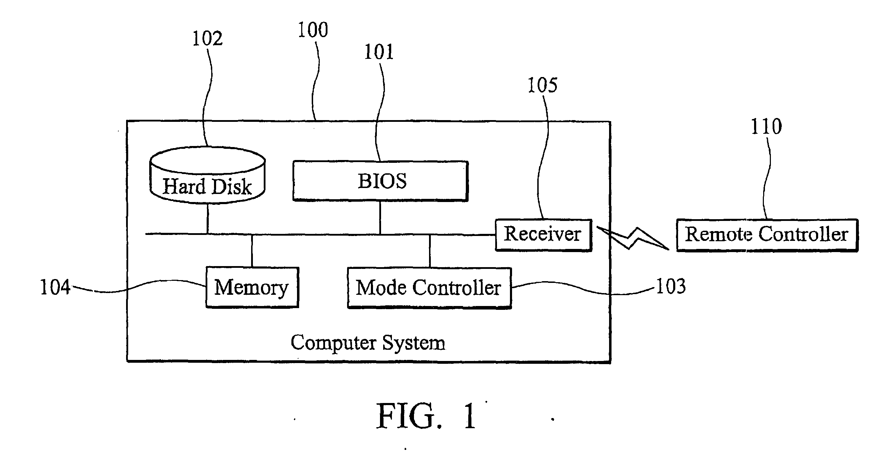

Fig. 1 illustrates the architecture of the computer system capable of operating in multiple operation modes according to the embodiment of the present invention. The computer system 100 includes a BIOS 101, a hard disk 102, a mode controller 103, a memory 104 and a receiver 105 that is used to receive signals from a remote controller 110.

The BIOS 101 is a firmware stored in a ROM (Read Only Memory) on the motherboard of the computer system 100, and provides several functions, such as basic input and output, setting configuration, hardware testing of the computer system, and so forth.

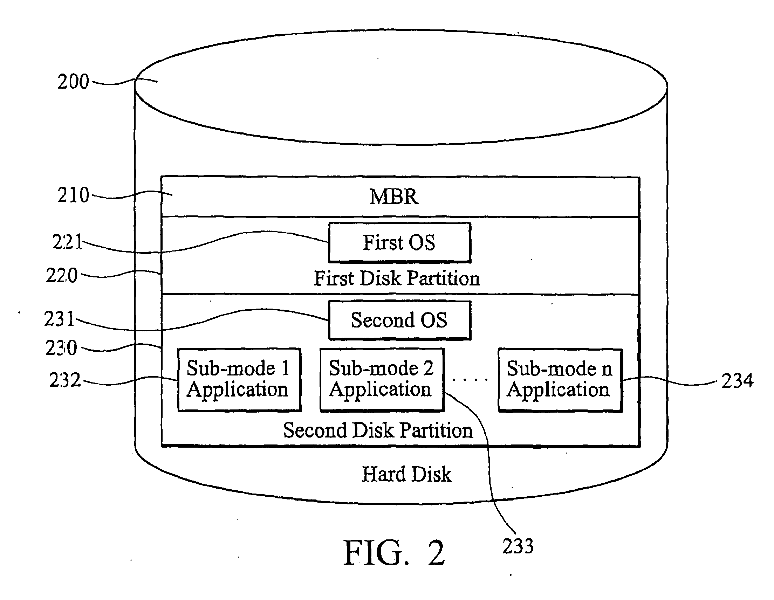

Fig. 2 illustrates the configuration of the hard disk 200 (the hard disk 102 in Fig. 1) of the computer system 100 according to the embodiment of the present invention. The hard disk 200 includes a MBR (Master Boot Record) 210, a first disk partition 220, and a second disk partition 230. The MBR 210 is the first sector of the first cylinder in the hard disk 200. The MBR 210 stores a master partition table recording the start address and end address of each partition, and a master boot program. When the computer system 100 is powered up, the master boot program can search the boot sector of the boot partition in the master partition table, and boot the computer system 100.

The first disk partition 220 is a default bootable partition, which enables the computer system 100 to run in the PC mode. The PC mode mentioned throughout the invention indicates a normal operation mode of the computer system, in which all of the software applications, hardware drivers and necessary user interfaces are loaded into the memory and present under the circumstances of operation system for achieving desired functions in response to the instructions from user. The first disk partition 220 includes a first operating system (OS) 221, for example, Windows XP operating system developed by Microsoft Corporation, which is a complete version of operating system. The second disk partition 230 enables the computer system 100 to run in accordance with a selected sub-mode being defined as an entry of a multimedia operation mode class, and includes a second OS 231 and a plurality sub-mode applications 232∼234 respectively specific to a corresponding sub-mode, in which the number of the sub-mode applications is the same with the number of the sub-modes, and each sub-mode has a corresponding sub-mode application. In this embodiment, the second OS is a refined version of the operating system in which the operating environment of the computer system is purified, by allowing the user the accessibility of the specific sub-mode application, related hardware driver and necessary user interface to accomplish desired multimedia task, while forbidding the user contacting the software applications, hardware drivers and user interfaces that are irrelevant to the desired multimedia task. Moreover, the sub-modes defined in the multimedia operation mode class include a music playing mode, a DVD/VCD (video) playing mode, a TV broadcasting mode, a radio (AM/FM) receiving mode, and a photo exploring mode.

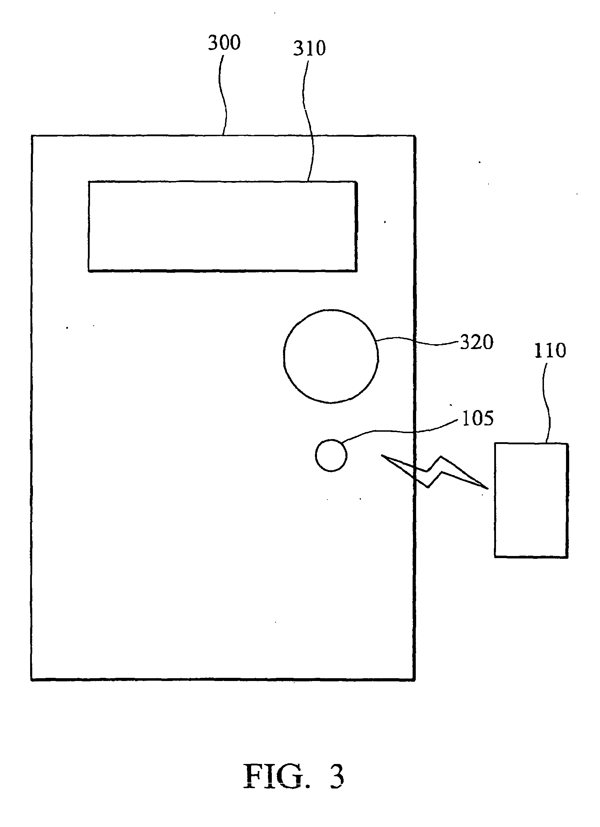

The mode controller 103 indicates the current mode of the computer system. In the embodiment, the mode controller 103 is a manual control, as shown by the mode control 320 in Fig. 3. The mode control 320 can be constructed on the computer host 300, as a knob controller, and the mode control 320 can be manipulated to switch between the PC mode and the sub-modes. Further, an LCD module 310 can be constructed on the computer host 300 to display the operation mode of the computer system.

It should be noted that the LCD module 310 and the mode control 320 can be managed and monitored by an additional microprocessor (not shown in Fig. 3), with the computer system 100 being communicated with the additional microprocessor via an input/output interface to detect the status of the mode control 320 and command the additional microprocessor to display related information on the LCD module 310, in which the input/output interface may be a serial communication port (COM port) or a GPIO (General Purpose Input/Output) interface.

The memory 104 stores related operation data needed by the computer system 100. A receiver 105 can also be constructed on the computer host 300 to receive signals from a remote controller 110, by which the receiver 105 may transmit messages to the computer system 100 via a USB (Universal Serial Bus) interface.

In current practice, the computer system may be turned off by entering a hibernation state. In this situation, the computer system compresses the data in the dynamic RAM into an image file and stores it to the hard disk of the computer system. When the computer system boots, the image file can be decompressed and executed in the memory directly. Thus the computer system can quickly restore its operating environment in use before the computer system is turned off. The present invention employs the above feature, with details to be discussed later.

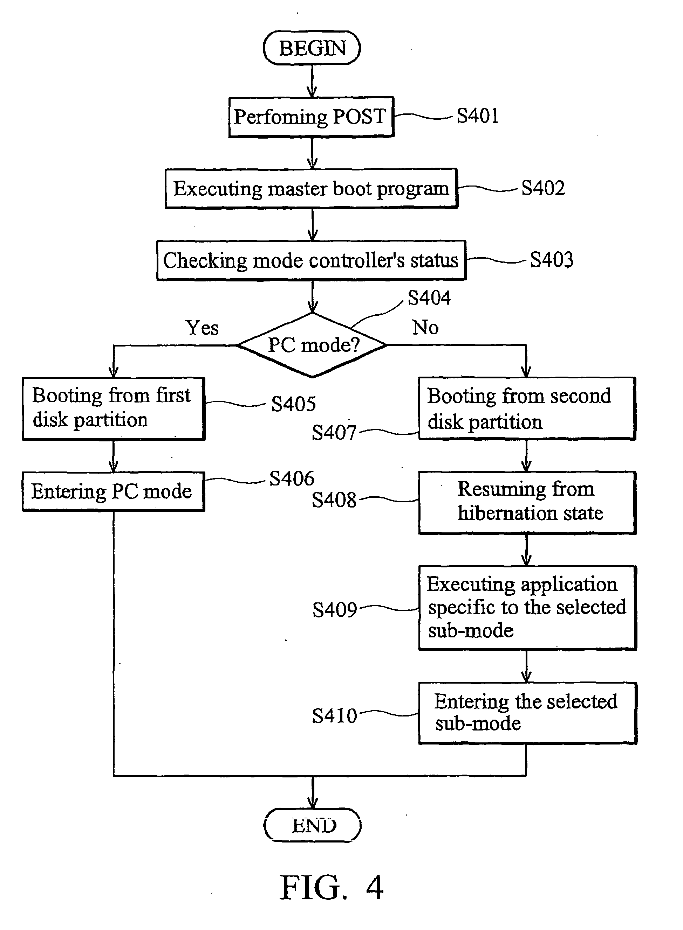

Fig. 4 shows the boot process of the computer system 100 according to the embodiment of the present invention. When the computer system 100 boots, in step S401, the BIOS 101 performs POST (Power On self Test) operations, and in steps S402 and S403, executes the master boot program to check the status of the mode controller 103 (mode control 320) .

If the status of the mode controller indicates that the operation mode of the computer system is a PC mode (Yes in step S404), in step S405, the computer system 100 boots from the first disk partition 220, and, in step S406, enters the PC mode. If the status of the mode controller indicates that the operation mode of the computer system is a sub-mode defined as an entry of a multimedia operation mode class (No in step S404), in step S407, the computer system 100 boots from the second disk partition 230. Then, in step S408, the computer system 100 resumes from the hibernation state, that is, loads, decompresses, and executes the image file from the memory directly. Thereafter, in step S409, the computer system 100 executes an application specific to the selected sub-mode, and in step S410, enters the selected sub-mode.

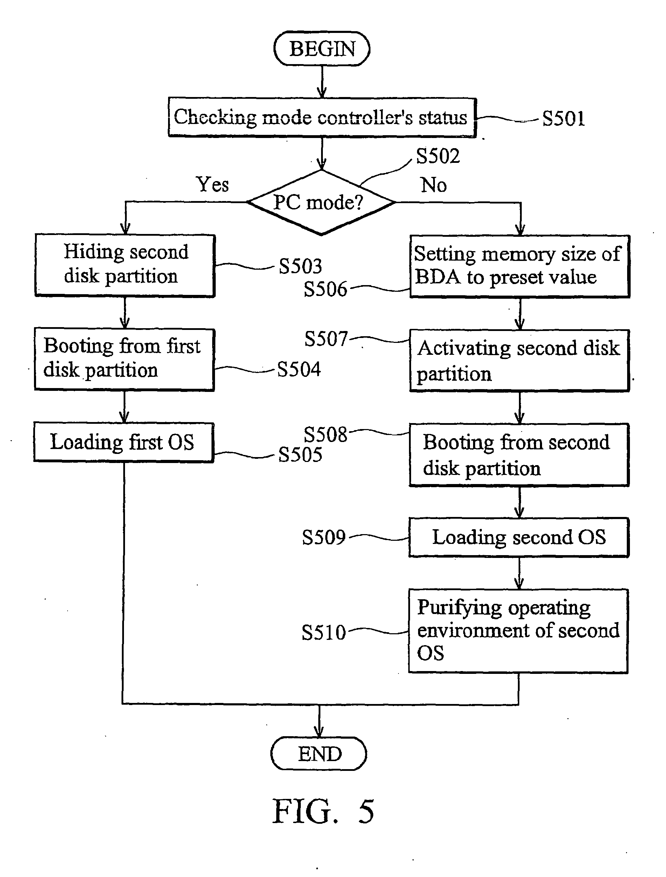

Fig. 5 shows the process of the master boot program according to the embodiment of the present invention. First, in step S501, the master boot program checks the status of the mode control 320. If the status of the mode controller indicates the PC mode (Yes in step S502), in step S503, the master boot program hides the second disk partition 230, and in step S504, boots the computer system 100 from the first disk partition 220. Thereafter, in step S505, the master boot program loads the first operating system 221 stored in the first disk partition 220, thereby enabling the computer system 100 to run in the PC mode.

If the status of the mode controller indicates a sub-mode (No in step S502), in step S506, the master boot program sets the memory size of the data area in the BIOS (BIOS Data Area, BDA) to a predetermined value, such as 128MB. It should be noted that because the operating system will prompt users to delete related data and reboot the computer system if the memory size detected by the operating system is different from that of the image file recorded in the hibernation state, the purpose of the step S506 is to restrict and maintain the memory size equal to the size of the image file.

Thereafter, in step S507, the master boot program activates the second disk partition 230, and in step S508, boots the computer system 100 from the second disk partition 230. Afterward, in step S509, the master boot program loads the second operating system 231 in the second disk partition 230, thereby enabling the computer system 100 to run in the selected sub-mode. Further, in step S510, the master boot program purifies the operating environment of the operating system, for example, to limit keyboard and mouse functions and disable Plug-and-Play capability, so as to maintain a simple and stable operating environment. It should be noted that the operation of step S510 will be performed only if the computer system 100 entered the sub-mode for the first time, however, if the computer system 100 has ever entered the sub-mode, the execution of step S510 can be skipped because the related limitation has been recorded into the image file in the hibernation state.

When the computer system 100 enters the multimedia mode, a monitor program is executed in the background and communicates with the additional microprocessor, in order to detect the status of the mode control 320 and the LCD module 310 via the input/output interface. The monitor program can instruct the additional microprocessor to display information, such as operation mode information on the LCD module 310.

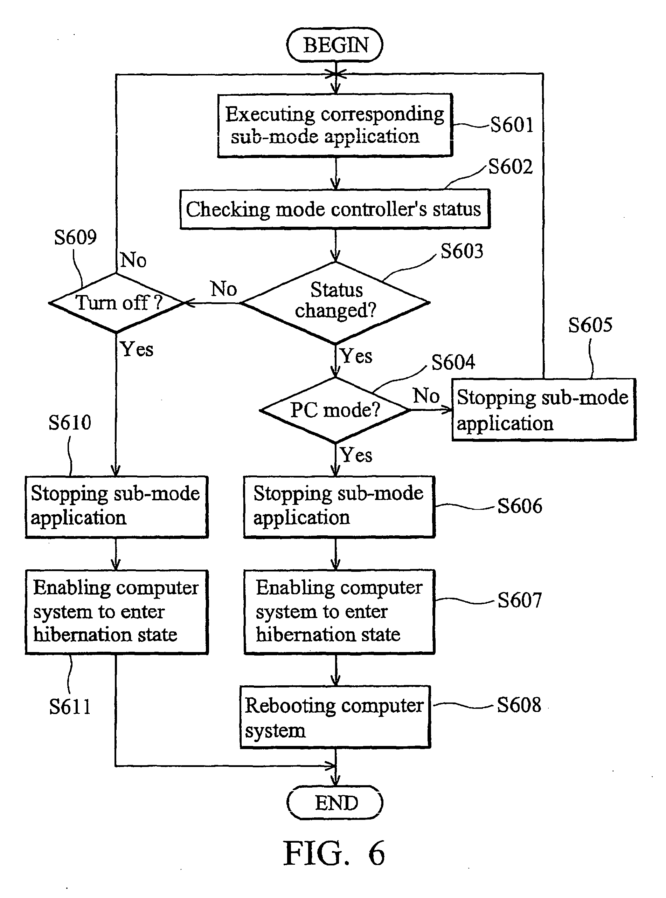

Fig. 6 shows the process of the monitor program while the computer system is running in the selected sub-mode according to the embodiment of the present invention. First, in step S601, the monitor program executes a sub-mode application specific to the selected sub-mode. Then, in step S602, the monitor program checks the status of the mode controller via the input/output interface.

If the status of the mode controller changes to another sub-mode o (Yes in step S603 and No in step S604), in step S605, the monitor program stops the current sub-mode application, and the flow returns to step S601, wherein the monitor program executes another sub-mode application specific to the currently selected sub-mode. If the status of the mode controller changes to the PC mode (Yes in step S603 and Yes in step S604), in step S606, the monitor program stops the current sub-mode application, and in step S607, enables the computer system 100 to perform related hibernation operations and enter the hibernation state. Afterward, in step S608, the monitor program reboots the computer system 100.

If the computer system is turned off (No in step S603 and Yes in step S609), in step S610, the monitor program stops the current sub-mode application, and in step S611, enables the computer system 100 to perform related hibernation operations and enter the hibernation state.

In addition, the monitor program can communicate with the receiver 105 via the USB interface to receive signals from the remote controller 110. When the computer system is operating in a selected sub-mode, a remote controller 110 can be used to instruct the computer system to execute the sub-mode application specific to the selected sub-mode and perform desired functions. After receiving the signal from the remote controller 110, the monitor program translates the signal into a corresponding function key or hot key signal being recognized or supported by the sub-mode application, and sends the key signal to the sub-mode application for further operation. At the same time, the monitor program may transmit a command corresponding to the signal to the additional microprocessor to update the content displayed in the LCD module 310.

In the PC mode, a resident program is executed in the background to detect the status of the mode control 320 or the mode controller 103.

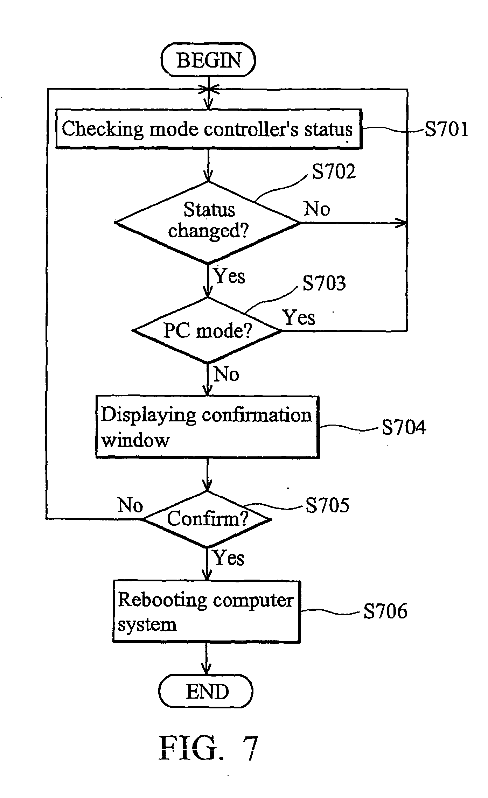

Fig. 7 shows the process of the resident program in the PC mode according to the embodiment of the present invention. First, in step S701, the resident program checks the status of the mode control 320. If the status has not been changed (No in step S702), or has been changed but remains in the PC mode, the flow returns to step S701. If the status has been changed to a selected sub-mode (No in step S703), in step S704, the resident program displays a confirmation window and waits for confirmation. If a confirmation signal is received through the confirmation window (Yes in step S705), in step S706, the resident program reboots the computer system 100. Otherwise, the flow returns to step S701.

As a result, by using the techniques disclosed herein according to the present invention, the computer system can be easily operated in multiple operation modes according to the manipulation of the mode controller being connected to the computer system. Thus, the computer system may save the time of loading peripheral applications and drivers, and perform initial settings when it is operating as a standalone electronic multimedia device.

## Claims

1. A computer system provided to operate in multiple operation modes, comprising:
a storage device (102) having a first disk partition (220) and a second disk partition (230), in which the first disk partition (220) stores a first operating system to enable the computer system to boot and run in a first operation mode, and the second disk partition (230) stores a second operating system ; and
a mode controller (103) having a status indicating an operation mode of the computer system,
wherein the storage device (102) further comprises a master boot program to detect the status of the mode controller, hide the second disk partition, boot the computer system from the first disk partition, load the first operating system therein, and thereby enable the computer system to run in the first operation mode if the status of the mode controller indicates the first operation mode, **characterized in that**
the second operating system to enable the computer system to boot and run in a sub-mode of a second operation mode, each sub-mode being defined as an entry of a multimedia operation mode class, each sub-mode having a corresponding sub-mode application stored in the second partition,
the master boot program further to activate the second disk partition, boot the computer system from the second disk partition, load the second operating system therein, and thereby enable the computer system to run in a selected sub-mode of the second operation mode by loading the sub-mode application for the selected sub-mode, if the status of the mode controller indicates the selected sub-mode of the second operation mode,
the computer system further executes a monitor program if the computer system runs in the selected sub-mode of the second operation mode, in which the monitor program executes a first application specific to the selected sub-mode of the second operation mode, detects the status of the mode controller, and stops the first application and executes a second application specific to another sub-mode of the second operation mode if the status of the mode controller changes to the another sub-mode of the second operation mode.

2. The computer system as claimed in claim 1 wherein the master boot program further sets the memory size of a BIOS data area in the storage device to a predetermined value if the computer system runs in the selected sub-mode of the second operation mode.

3. The computer system as claimed in claim 2 wherein the master boot program further purifies an operating environment of the second operating system if the computer system runs in the selected sub-mode of the second operation mode, by allowing the user the accessibility of the specific sub-mode application, related hardware driver and necessary user interface to accomplish desired multimedia task, while forbidding the user contacting the software applications, hardware drivers and user interfaces that are irrelevant to the desired multimedia task.

4. The computer system as claimed in claim 3 wherein the master boot program purifies the operating environment of the second operating system by limiting the use of keyboard and mouse of the computer system, and disabling PNP (Plug and Play) functions of the computer system.

5. The computer system as claimed in claim 1 wherein if the status of the mode controller changes to the first operation mode, the monitor program further stops the first application, enables the computer system to enter a hibernation state, and reboots the computer system, and wherein if the computer system is turned off, the monitor program further stops the first application and enables the computer system to enter a hibernation state.

6. The computer system as claimed in claim 1 further comprising an additional microprocessor to detect the status of the mode controller, and the monitor program detects the status of the mode controller via the additional microprocessor and an input/output interface.

7. The computer system as claimed in claim 6 wherein the input/output interface is a serial communication port or a GPIO (General Purpose Input Output) interface.

8. The computer system as claimed in claim 6 further comprising an LCD module being controlled by the microprocessor to display the operation mode of the computer system.

9. The computer system as claimed in claim 6 further comprising a receiver coupled with the monitor program via an input/output interface to receive a signal from a remote controller, so as to enable the monitor program to execute the first application according to the signal.

10. The computer system as claimed in claim 1 wherein the computer system further executes a resident program if the computer system runs in the first operating mode, in which the resident program detects the status of the mode controller, displays a confirmation window if the status of the mode controller changes to a sub-mode of the second operating mode, and reboots the computer system if a confirmation signal is received via the confirmation window.

11. The computer system as claimed in claim 1 wherein the sub modes of the second operation mode include music playing mode, a video playing mode, a TV broadcasting mode, a radio receiving mode, and a photo exploring mode.

12. The computer system as claimed in claim 11 wherein the mode controller is constructed as a manual control comprising a knob controller on the computer system.

13. A method for operating a computer system in multiple modes, comprising the steps of:
providing a storage device (102) having a first disk partition (220) and a second disk partition (230) in the computer system, in which the first disk partition stores a first operating system and the second disk partition stores a second operating system;
providing a mode controller (103) having at least one status indicating an operation mode of the computer system;
checking the status of the mode controller by a master boot program;
if the status of the mode controller indicates that the operation mode of the computer system is a first operation mode, hiding the second disk partition, booting the computer system from the first disk partition, loading the first operating system therein, thereby enabling the computer system to run in the first operation mode; **characterized in that**
if the status of the mode controller indicates that the operation mode of the computer system is a sub-mode of a second operation mode, each sub-mode being defined as an entry of a multimedia operation mode class, each sub-mode having a corresponding sub-mode application stored in the second partition, activating the second disk partition, booting the computer system from the second disk partition, loading the second operating system therein, thereby enabling the computer system to run in the sub-mode of the second operation mode by loading the sub-mode application for the selected sub-mode,
executing a monitor program, and, if the computer system runs in the sub-mode of the second operation mode, in which the monitor program executes a first application specific to the sub-mode of the second operation mode, detects the status of the mode controller, stopping the first application and executing a second application specific to another sub-mode of the second operation mode if the status of the mode controller changes to the another sub-mode of the second operation mode.

14. The method as claimed in claim 13 further comprising setting the memory size of a BIOS data area in the computer system to a predetermined value by the master boot program if the computer system runs in the sub-mode of the second operation mode.

15. The method as claimed in claim 14 further comprising purifying an operating environment of the second operating system by the master boot program if the computer system runs in the sub-mode of the second operation mode, by allowing the user the accessibility of the specific sub-mode application, related hardware driver and necessary user interface to accomplish desired multimedia task, while forbidding the user contacting the software applications, hardware drivers and user interfaces that are irrelevant to the desired multimedia task.

16. The method as claimed in claim 15 wherein the step of purifying the operating environment of the second operating system comprises limiting the use of keyboard and mouse of the computer system, and disabling PNP (Plug and Play) functions of the computer system.

17. The method as claimed in claim 13 wherein if the status of the mode controller changes to the first operation mode, the monitor program further stops the first application, enables the computer system to enter a hibernation state, and reboots the computer system.

18. The method as claimed in claim 17 wherein if the computer system is turned off, the monitor program further stops the first application and enables the computer system to enter a hibernation state.

19. The method as claimed in claim 17 further comprising providing an additional microprocessor to detect the status of the mode controller, the monitor program detects the status of the mode controller via the additional microprocessor and an input/output interface.

20. The method as claimed in claim 19 further comprising providing an LCD module being controlled by the microprocessor to display the operation mode of the computer system.

21. The method as claimed in claim 19 further comprising providing a receiver coupled to the monitor program via an input/output interface to receive a signal from a remote controller, and the monitor program operates the first application according to the signal.

22. The method as claimed in claim 13 further comprising executing a resident program if the computer system runs in the first operation mode, in which the resident program detects the status of the mode controller, displays a confirmation window if the status changes to a sub-mode of the second mode, and reboots the computer system if a confirmation signal is received via the confirmation window.

23. The method as claimed in claim 13 wherein the sub-modes of the second operation mode include a music playing mode, a video playing mode, a TV broadcasting mode, a radio receiving mode, and a photo exploring mode.

24. The method as claimed in claim 23 wherein the mode controller is constructed as a manual control comprising a knob controller on the computer system.

## Patentansprüche

1. Rechnersystem, bereitgestellt, um in mehreren Betriebsmodi zu arbeiten, umfassend:
eine Speichereinrichtung (102), die eine erste Plattenpartition (220) und eine zweite Plattenpartition (230) aufweist, in der die erste Plattenpartition (220) ein erstes Betriebssystem speichert, um dem Rechnersystem zu ermöglichen, hochzufahren und in einem ersten Betriebsmodus zu laufen, und die zweite Plattenpartition (230) ein zweites Betriebssystem speichert; und
eine Modussteuerung (103), die einen Status aufweist, der einen Betriebsmodus des Rechnersystems angibt,
wobei die Speichereinrichtung (102) überdies ein Master-Boot-Programm umfasst, um den Status der Modussteuerung zu erkennen, die zweite Plattenpartition zu verbergen, das Rechnersystem von der ersten Plattenpartition hochzufahren, das erste Betriebssystem darin zu laden und dabei dem Rechnersystem zu ermöglichen, im ersten Betriebsmodus zu laufen, wenn der Status der Modussteuerung den ersten Betriebsmodus angibt, **dadurch gekennzeichnet, dass**
das zweite Betriebssystem dem Rechnersystem ermöglicht, hochzufahren und in einem Untermodus eines zweiten Betriebsmodus' zu laufen, wobei jeder Untermodus als Eintrag einer Multimedia-Betriebsmodusklasse bestimmt ist, wobei jeder Untermodus eine entsprechende Untermodus-Anwendung aufweist, die in der zweiten Partition gespeichert ist,
das Master-Boot-Programm überdies die zweite Plattenpartition aktiviert, das Rechnersystem von der zweiten Plattenpartition hochfährt, das zweite Betriebssystem darin lädt und **dadurch** dem Rechnersystem ermöglicht, durch Laden der Untermodus-Anwendung für den ausgewählten Untermodus in einem ausgewählten Untermodus des zweiten Betriebsmodus' zu laufen, wenn der Status der Modussteuerung den ausgewählten Untermodus des zweiten Betriebsmodus' angibt,
das Rechnersystem überdies ein Überwachungsprogramm ausführt, wenn das Rechnersystem in dem ausgewählten Untermodus des zweiten Betriebsmodus' läuft, in dem das Überwachungsprogramm eine erste Anwendung ausführt, die spezifisch für den ausgewählten Untermodus des zweiten Betriebsmodus' ist, den Status der Modussteuerung erkennt und die erste Anwendung stoppt und eine zweite Anwendung ausführt, die spezifisch für einen anderen Untermodus des zweiten Betriebsmodus' ist, wenn der Status der Modussteuerung zu einem anderen Untermodus des zweiten Betriebsmodus' wechselt.

2. Rechnersystem nach Anspruch 1, wobei das Master-Boot-Programm überdies die Speichergröße eines BIOS-Datenbereichs in der Speichereinrichtung auf einen vorbestimmten Wert einstellt, wenn das Rechnersystem in dem ausgewählten Untermodus des zweiten Betriebsmodus' läuft.

3. Rechnersystem nach Anspruch 2, wobei das Master-Boot-Programm überdies eine Betriebsumgebung des zweiten Betriebssystems reinigt, wenn das Rechnersystem in dem ausgewählten Untermodus des zweiten Betriebsmodus' läuft, indem dem Anwender die Zugriffsmöglichkeit auf die spezifische Untermodus-Anwendung, den zugehörigen Hardware-Treiber und die notwendige Anwenderschnittstelle erlaubt ist, um die gewünschte Multimedia-Aufgabe zu erfüllen, während dem Anwender verboten ist, die Software-Anwendungen, Hardware-Treiber und Anwenderschnittstellen zu kontaktieren, die für die gewünschte Multimedia-Aufgabe ohne Bedeutung sind.

4. Rechnersystem nach Anspruch 3, wobei das Master-Boot-Programm die Betriebsumgebung des zweiten Betriebssystems durch Einschränken der Verwendung von Tastatur und Maus des Rechnersystems und durch Deaktivieren der PNP (Plug and Play)-Funktionen des Rechnersystems reinigt.

5. Rechnersystem nach Anspruch 1, wobei, wenn der Status der Modussteuerung in den ersten Betriebsmodus wechselt, das Überwachungsprogramm überdies die erste Anwendung stoppt, dem Rechnersystem ermöglicht, in einen Stromsparstatus zu schalten und das Rechnersystem erneut hochfährt, und wobei, wenn das Rechnersystem ausgeschaltet wird, das Überwachungsprogramm überdies die erste Anwendung stoppt und dem Rechnersystem ermöglicht, in einen Stromsparstatus zu schalten.

6. Rechnersystem nach Anspruch 1, überdies umfassend einen zusätzlichen Mikroprozessor, um den Status der Modussteuerung zu erkennen, und wobei das Überwachungsprogramm den Status der Modussteuerung über den zusätzlichen Mikroprozessor und eine Eingabe-/Ausgabeschnittstelle erkennt.

7. Rechnersystem nach Anspruch 6, wobei die Eingabe-/Ausgabeschnittstelle eine serielle Schnittstelle oder eine GPIO (General Purpose Input Output)-Schnittstelle ist.

8. Rechnersystem nach Anspruch 6, überdies umfassend ein LCD-Modul, das von dem Mikroprozessor gesteuert wird, um den Betriebsmodus des Rechnersystems anzuzeigen.

9. Rechnersystem nach Anspruch 6, überdies umfassend einen Empfänger, der mit dem Überwachungsprogramm über eine Eingabe-/Ausgabeschnittstelle gekoppelt ist, um ein Signal von einer Fernsteuerung zu empfangen, um dem Überwachungsprogramm zu ermöglichen, die erste Anwendung gemäß dem Signal auszuführen.

10. Rechnersystem nach Anspruch 1, wobei das Rechnersystem überdies ein residentes Programm ausführt, wenn das Rechnersystem im ersten Betriebsmodus läuft, in dem das residente Programm den Status der Modussteuerung erkennt, ein Bestätigungsfenster anzeigt, wenn der Status der Modussteuerung in einen Untermodus des zweiten Betriebsmodus wechselt, und das Rechnersystem erneut hochfährt, wenn ein Bestätigungssignal über das Bestätigungsfenster empfangen wird.

11. Rechnersystem nach Anspruch 1, wobei die Untermodi des zweiten Betriebsmodus' einen Musikabspielmodus, einen Videoabspielmodus, einen Fernsehrundfunkmodus, einen Funkempfangsmodus und einen Fotoabtastmodus umfasst.

12. Rechnersystem nach Anspruch 11, wobei die Modussteuerung als manuelle Steuerung, umfassend eine Knopfsteuerung, an dem Rechnersystem gebaut ist.

13. Verfahren zum Bedienen eines Rechnersystems in mehreren Modi, umfassend die folgenden Schritte:
Bereitstellen einer Speichereinrichtung (102), die eine erste Plattenpartition (220) und eine zweite Plattenpartition (230) in dem Rechnersystem aufweist, in der die erste Plattenpartition ein erstes Betriebssystem speichert und die zweite Plattenpartition ein zweites Betriebssystem speichert;
Bereitstellen einer Modussteuerung (103), die mindestens einen Status aufweist, der einen Betriebsmodus des Rechnersystems angibt;
Prüfen des Status' der Modussteuerung durch ein Master-Boot-Programm;
wenn der Status der Modussteuerung angibt, dass der Betriebsmodus des Rechnersystems ein erster Betriebsmodus ist, Verbergen der zweiten Plattenpartition, Hochfahren des Rechnersystems von der ersten Plattenpartition, Laden des ersten Betriebssystems darin, wodurch dem Rechnersystem ermöglicht wird, im ersten Betriebsmodus zu laufen; **dadurch gekennzeichnet, dass**
wenn der Status der Modussteuerung angibt, dass der Betriebsmodus des Rechnersystems ein Untermodus eines zweiten Betriebsmodus' ist, jeder Untermodus als ein Eintrag einer Multimedia-Betriebsmodusklasse bestimmt ist, jeder Untermodus eine entsprechende Untermodus-Anwendung aufweist, die in der zweiten Partition gespeichert ist, Aktivieren der zweiten Plattenpartition, Hochfahren des Rechnersystems von der zweiten Plattenpartition, Laden des zweiten Betriebssystems darin, wodurch dem Rechnersystem ermöglicht wird, im Untermodus des zweiten Betriebsmodus' durch Laden der Untermodus-Anwendung für den ausgewählten Untermodus zu laufen,
Ausführen eines Überwachungsprogramms und, wenn das Rechnersystem in dem Untermodus des zweiten Betriebsmodus' läuft, in dem das Überwachungsprogramm eine erste Anwendung ausführt, die spezifisch für den Untermodus des zweiten Betriebsmodus ist, den Status der Modussteuerung erkennt, Stoppen der ersten Anwendung und Ausführen einer zweiten Anwendung, die spezifisch für einen anderen Untermodus des zweiten Betriebsmodus' ist, wenn der Status der Modussteuerung zu einem anderen Untermodus des zweiten Betriebsmodus' wechselt.

14. Verfahren nach Anspruch 13, überdies umfassend das Einstellen der Speichergröße eines BIOS-Datenbereichs in dem Rechnersystem auf einen vorbestimmten Wert durch das Master-Boot-Programm, wenn das Rechnersystem im Untermodus des zweiten Betriebsmodus' läuft.

15. Verfahren nach Anspruch 14, überdies umfassend das Reinigen einer Betriebsumgebung des zweiten Betriebssystems durch das Master-Boot-Programm, wenn das Rechnersystem in dem Untermodus des zweiten Betriebsmodus' läuft, indem dem Anwender die Zugriffsmöglichkeit auf die spezifische Untermodus-Anwendung, den zugehörigen Hardware-Treiber und die notwendige Anwenderschnittstelle erlaubt ist, um die gewünschte Multimedia-Aufgabe zu erfüllen, während dem Anwender verboten ist, die Software-Anwendungen, Hardware-Treiber und Anwenderschnittstellen zu kontaktieren, die für die gewünschte Multimedia-Aufgabe ohne Bedeutung sind.

16. Verfahren nach Anspruch 15, wobei der Schritt des Reinigens der Betriebsumgebung des zweiten Betriebssystems das Einschränken der Verwendung von Tastatur und Maus des Rechnersystems und das Deaktivieren der PNP (Plug and Play)-Funktionen des Rechnersystems umfasst.

17. Verfahren nach Anspruch 13, wobei, wenn der Status der Modussteuerung in den ersten Betriebsmodus wechselt, das Überwachungsprogramm überdies die erste Anwendung stoppt, es dem Rechnersystem ermöglicht, in einen Stromsparstatus zu schalten und das Rechnersystem erneut hochfährt.

18. Verfahren nach Anspruch 17, wobei, wenn das Rechnersystem ausgeschaltet wird, das Überwachungsprogramm überdies die erste Anwendung stoppt und es dem Rechnersystem ermöglicht, in einen Stromsparstatus zu schalten.

19. Verfahren nach Anspruch 17, überdies umfassend das Bereitstellen eines zusätzlichen Mikroprozessors, um den Status der Modussteuerung zu erkennen, wobei das Überwachungsprogramm den Status der Modussteuerung über den zusätzlichen Mikroprozessor und eine Eingabe-/Ausgabeschnittstelle erkennt.

20. Verfahren nach Anspruch 19, überdies umfassend das Bereitstellen eines LCD-Moduls, das durch den Mikroprozessor gesteuert wird, um den Betriebsmodus des Rechnersystems anzuzeigen.

21. Verfahren nach Anspruch 19, überdies umfassend das Bereitstellen eines Empfängers, der an das Überwachungsprogramm über eine Eingabe-/Ausgabeschnittstelle gekoppelt ist, um ein Signal von einer Fernsteuerung zu empfangen, wobei das Überwachungsprogramm die erste Anwendung gemäß dem Signal betreibt.

22. Verfahren nach Anspruch 13, überdies umfassend das Ausführen eines residenten Programms, wenn das Rechnersystem im ersten Betriebsmodus läuft, in dem das residente Programm den Status der Modussteuerung erkennt, ein Bestätigungsfenster anzeigt, wenn der Status in einen Untermodus des zweiten Modus' schaltet, und das Rechnersystem erneut hochfährt, wenn ein Bestätigungssignal über das Bestätigungsfenster empfangen wird.

23. Verfahren nach Anspruch 13, wobei die Untermodi des zweiten Betriebsmodus' einen Musikabspielmodus, einen Videoabspielmodus, einen Fernsehrundfunkmodus, einen Funkempfangsmodus und einen Fotoabtastmodus umfassen.

24. Verfahren nach Anspruch 23, wobei die Modussteuerung als manuelle Steuerung, umfassend eine Knopfsteuerung, an dem Rechnersystem aufgebaut ist.

## Revendications

1. Système informatique prévu pour fonctionner dans de multiples modes de fonctionnement, comprenant :
un dispositif de mémorisation (102) comportant une première partition de disque (220) et une deuxième partition de disque (230), dans lequel la première partition de disque (220) mémorise un premier système d'exploitation pour permettre au système informatique de démarrer et de fonctionner dans un premier mode de fonctionnement, et la deuxième partition de disque (230) mémorise un deuxième système d'exploitation ; et
un contrôleur de mode (103) ayant un état indiquant un mode de fonctionnement du système informatique,
dans lequel le dispositif de mémorisation (102) comprend en outre un programme de démarrage maître pour détecter l'état du contrôleur de mode, cacher la deuxième partition de disque, démarrer le système informatique à partir de la première partition de disque, charger le premier système d'exploitation dans celui-ci, et permettre de ce fait au système informatique de fonctionner dans le premier mode de fonctionnement si l'état du contrôleur de mode indique le premier mode de fonctionnement, **caractérisé en ce que**
le deuxième système d'exploitation permet au système informatique de démarrer et de fonctionner dans un mode secondaire d'un deuxième mode de fonctionnement, chaque mode secondaire étant défini en tant qu'entrée d'une classe de mode de fonctionnement multimédia, chaque mode secondaire ayant une application de mode secondaire correspondante mémorisée dans la deuxième partition,
le programme de démarrage maître active en outre la deuxième partition de disque, démarre le système informatique à partir de la deuxième partition de disque, charge le deuxième système d'exploitation dans celui-ci, et permet de ce fait au système informatique de fonctionner dans un mode secondaire sélectionné du deuxième mode de fonctionnement en chargeant l'application de mode secondaire pour le mode secondaire sélectionné, si l'état du contrôleur de mode indique le mode secondaire sélectionné du deuxième mode de fonctionnement,
le système informatique exécute en outre un programme de surveillance si le système informatique fonctionne dans le mode secondaire sélectionné du deuxième mode de fonctionnement, dans lequel le programme de surveillance exécute une première application spécifique au mode secondaire sélectionné du deuxième mode de fonctionnement, détecte l'état du contrôleur de mode, et arrête la première application et exécute une deuxième application spécifique à un autre mode secondaire du deuxième mode de fonctionnement si l'état du contrôleur de mode change en un autre mode secondaire du deuxième mode de fonctionnement.

2. Système informatique selon la revendication 1, dans lequel le programme de démarrage maître fixe en outre la taille de mémoire d'une zone de données de BIOS dans le dispositif de mémorisation à une valeur prédéterminée si le système informatique fonctionne dans le mode secondaire sélectionné du deuxième mode de fonctionnement.

3. Système informatique selon la revendication 2, dans lequel le programme de démarrage maître assainit en outre un environnement de fonctionnement du deuxième système d'exploitation si le système informatique fonctionne dans le mode secondaire sélectionné du deuxième mode de fonctionnement, en donnant à l'utilisateur l'accessibilité à l'application de mode secondaire spécifique, à un pilote de matériel associé et à une interface utilisateur nécessaire pour réaliser une tâche multimédia souhaitée, tout en interdisant à l'utilisateur de contacter les applications logicielles, les pilotes de matériels et les interfaces utilisateur qui ne sont pas pertinents pour la tâche multimédia souhaitée.

4. Système informatique selon la revendication 3, dans lequel le programme de démarrage maître assainit l'environnement de fonctionnement du deuxième système d'exploitation en limitant l'utilisation du clavier et de la souris du système informatique, et en désactivant les fonctions PNP (Plug and Play) du système informatique.

5. Système informatique selon la revendication 1, dans lequel, si l'état du contrôleur de mode passe dans le premier mode de fonctionnement, le programme de surveillance arrête en outre la première application, permet au système informatique d'entrer dans un état d'hibernation, et redémarre le système informatique, et dans lequel si le système informatique est arrêté, le programme de surveillance arrête en outre la première application et permet au système informatique d'entrer dans un état d'hibernation.

6. Système informatique selon la revendication 1, comprenant en outre un microprocesseur supplémentaire pour détecter l'état du contrôleur de mode, et le programme de surveillance détecte l'état du contrôleur de mode par l'intermédiaire du microprocesseur supplémentaire et d'une interface d'entrée/sortie.

7. Système informatique selon la revendication 6, dans lequel l'interface d'entrée/sortie est un port de communication série ou une interface GPIO (General Purpose Input Output) .

8. Système informatique selon la revendication 6, comprenant en outre un module de LCD commandé par le microprocesseur pour afficher le mode de fonctionnement du système informatique.

9. Système informatique selon la revendication 6, comprenant en outre un récepteur couplé au programme de surveillance par l'intermédiaire d'une interface d'entrée/sortie pour recevoir un signal d'une télécommande, de manière à permettre au programme de surveillance d'exécuter la première application conformément au signal.

10. Système informatique selon la revendication 1, dans lequel le système informatique exécute en outre un programme résident, si le système informatique fonctionne dans le premier mode de fonctionnement, dans lequel le programme résident détecte l'état du contrôleur de mode, affiche une fenêtre de confirmation si l'état du contrôleur de mode passe dans un mode secondaire du deuxième mode de fonctionnement, et redémarre le système informatique si un signal de confirmation est reçu par l'intermédiaire de la fenêtre de confirmation.

11. Système informatique selon la revendication 1, dans lequel les modes secondaires du deuxième mode de fonctionnement comprennent un mode de reproduction de musique, un mode de reproduction vidéo, un mode de diffusion de télévision, un mode de réception radio, et un mode d'exploration de photographies.

12. Système informatique selon la revendication 11, dans lequel le contrôleur de mode est réalisé en tant que dispositif de commande manuelle comprenant un contrôleur à bouton dans le système informatique.

13. Procédé pour mettre en oeuvre un système informatique dans de multiples modes, comprenant les étapes consistant à:
prévoir un dispositif de mémorisation (102) comportant une première partition de disque (220) et une deuxième partition de disque (230) dans le système informatique, dans lequel la première partition de disque mémorise un premier système d'exploitation et la deuxième partition de disque mémorise un deuxième système d'exploitation ;
prévoir un contrôleur de mode (103) ayant au moins un état indiquant un mode de fonctionnement du système informatique ;
vérifier l'état du contrôleur de mode par un programme de démarrage maître ;
si l'état du contrôleur de mode indique que le mode de fonctionnement du système informatique est un premier mode de fonctionnement, cacher la deuxième partition de disque, démarrer le système informatique à partir de la première partition de disque, charger le premier système d'exploitation dans celui-ci, permettre de ce fait au système informatique de fonctionner dans le premier mode de fonctionnement ; **caractérisé en ce que**
si l'état du contrôleur de mode indique que le mode de fonctionnement du système informatique est un mode secondaire d'un deuxième mode de fonctionnement, chaque mode secondaire étant défini en tant qu'entrée d'une classe de mode de fonctionnement multimédia, chaque mode secondaire ayant une application de mode secondaire correspondante mémorisée dans la deuxième partition, activer la deuxième partition de disque, démarrer le système informatique à partir de la deuxième partition de disque, charger le deuxième système d'exploitation dans celui-ci, permettre de ce fait au système informatique de fonctionner dans le mode secondaire du deuxième mode de fonctionnement en chargeant l'application de mode secondaire pour le mode secondaire sélectionné,
exécuter un programme de surveillance, et, si le système informatique fonctionne dans le mode secondaire du deuxième mode de fonctionnement, dans lequel le programme de surveillance exécute une première application spécifique au mode secondaire du deuxième mode de fonctionnement, détecte l'état du contrôleur de mode, arrêter la première application et exécuter une deuxième application spécifique à un autre mode secondaire du deuxième mode de fonctionnement si l'état du contrôleur de mode passe dans un autre mode secondaire du deuxième mode de fonctionnement.

14. Procédé selon la revendication 13, consistant en outre à fixer la taille de mémoire d'une zone de données de BIOS dans le système informatique à une valeur prédéterminée par le programme de démarrage maître si le système informatique fonctionne dans le mode secondaire du deuxième mode de fonctionnement.

15. Procédé selon la revendication 14, consistant en outre à assainir un environnement de fonctionnement du deuxième système d'exploitation par le programme de démarrage maître si le système informatique fonctionne dans le mode secondaire du deuxième mode de fonctionnement, en donnant à l'utilisateur l'accessibilité à l'application de mode secondaire spécifique, à un pilote de matériel associé et à une interface utilisateur nécessaire pour exécuter une tâche multimédia souhaitée, tout en interdisant à l'utilisateur de contacter les applications logicielles, les pilotes de matériels et les interfaces utilisateur qui ne sont pas pertinents pour la tâche multimédia souhaitée.

16. Procédé selon la revendication 15, dans lequel l'étape d'assainissement de l'environnement de fonctionnement du deuxième système d'exploitation consiste à limiter l'utilisation du clavier et de la souris du système informatique, et désactiver les fonctions PNP (Plug and Play) du système informatique.

17. Procédé selon la revendication 13, dans lequel, si l'état du contrôleur de mode passe dans le premier mode de fonctionnement, le programme de surveillance arrête en outre la première application, permet au système informatique d'entrer dans un état d'hibernation, et redémarre le système informatique.

18. Procédé selon la revendication 17, dans lequel, si le système informatique est arrêté, le programme de surveillance arrête en outre la première application et permet au système informatique d'entrer dans un état d'hibernation.

19. Procédé selon la revendication 17, consistant en outre à prévoir un microprocesseur supplémentaire pour détecter l'état du contrôleur de mode, le programme de surveillance détectant l'état du contrôleur de mode par l'intermédiaire du microprocesseur supplémentaire et d'une interface d'entrée/sortie.

20. Procédé selon la revendication 19, consistant en outre à prévoir un module de LCD commandé par le microprocesseur pour afficher le mode de fonctionnement du système informatique.

21. Procédé selon la revendication 19, consistant en outre à prévoir un récepteur couplé au programme de surveillance par l'intermédiaire d'une interface d'entrée/sortie pour recevoir un signal d'une télécommande, et le programme de surveillance mettant en oeuvre la première application conformément au signal.

22. Procédé selon la revendication 13, consistant en outre à exécuter un programme résident si le système informatique fonctionne dans le premier mode de fonctionnement, dans lequel le programme résident détecte l'état du contrôleur de mode, affiche une fenêtre de confirmation si l'état passe dans un mode secondaire du deuxième mode, et redémarre le système informatique si un signal de confirmation est reçu par l'intermédiaire de la fenêtre de confirmation.

23. Procédé selon la revendication 13, dans lequel les modes secondaires du deuxième mode de fonctionnement comprennent un mode de reproduction de musique, un mode de reproduction vidéo, un mode de diffusion de télévision, un mode de réception radio, et un mode d'exploration de photographies.

24. Procédé selon la revendication 23, dans lequel le contrôleur de mode est réalisé en tant que dispositif de commande manuelle comprenant un contrôleur à bouton dans le système informatique.
